# EUROPÄISCHE PATENTSCHRIFT

(11) **EP 1 156 956 B1**
(45) Veröffentlichungstag und Bekanntmachung des Hinweises auf die Patenterteilung: **08.01.2003**
(21) Anmeldenummer: 00916793.3
(22) Anmeldetag: 28.02.2000
(51) Int. Cl.: B62D 1/06

(54) **BEHEIZBARES LENKRAD**
HEATABLE STEERING WHEEL
VOLANT POUVANT ETRE CHAUFFE

(30) Priorität: 01.03.1999 DE 19910132
(43) Veröffentlichungstag der Anmeldung: 28.11.2001
(73) Patentinhaber: Takata-Petri AG, 63743 Aschaffenburg (DE)
(72) Erfinder: BONN, Helmut, D-63808 Heibach (DE); SCHLETT, Egon, D-63743 Aschaffenburg (DE)
(74) Vertreter: Baumgärtel, Gunnar, Dr.
(86) Internationale Anmeldenummer: DE0000672
(87) Internationale Veröffentlichungsnummer: WO00051872

(56) Entgegenhaltungen:
- EP-A- 0 831 117
- DE-U- 29 712 839
- PATENT ABSTRACTS OF JAPAN vol. 8, no. 26 (M-273) [1463], 3. Februar 1984 (1984-02-03) -& JP 58 183348 A (NIPPON JIDOSHA BUHIN SOGO KENKYUSHO), 26. Oktober 1983 (1983-10-26)

## Beschreibung

Die Erfindung betrifft ein beheizbares Lenkrad nach dem Oberbegriff des Anspruchs 1.

Zur Erhöhung des Komforts für einen Kraftfahrzeuglenker im Winter werden neben der Fahrzeuginnenraumbeheizung zunehmend auch spezielle Sitzbeheizungen und beheizbare Lenkräder angeboten. Dabei finden in Lenkrädern vorwiegend Heizdrähte im Lenkradkranz als Widerstandsheizung Anwendung.

Solche Zusatzausstattungen werden insbesondere in Fahrzeugen der höheren Preisklasse mit einer entsprechend aufwendigen Innenraumgestaltung angeboten, die sich z. B. durch Echtholzfurnier und/oder mit Leder bezogene Teile auszeichnen. Gerade bei beheizbaren Lenkrädern ergeben sich aber mit diesen Materialien Probleme. Die Beheizung von mit Holz verkleideten Teilen eines Lenkrades breitet Schwierigkeiten, da Holz eine schlechte Wärmeleitfähigkeit aufweist und die Holzsegmente eines Lenkrades zudem meist eine relativ große Dicke aufweisen. Besonders bei einer Kombinationen von mit Leder bezogenen und mit Holz verkleideten Segmenten an einem Lenkrad ist es deswegen bisher nicht üblich, die mit Holz verkleideten Teile des Lenkrades zu beheizen.

Weiterhin wurde z.B. in der DE 297 12 839 zur Vereinfachung der Herstellung eines beheizbaren Lenkrades vorgeschlagen, als Widerstandsheizung an ein Lenkradskelett angespritzte Schalen aus leitfähigem Kunststoff zu verwenden. Dabei wird aber das Problem einer, insbesondere für Holzdekore, zu ungleichmäßigen Erwärmung nicht gelöst.

Auch bei Lenkrädern, die mit Folie oder Lack ummantelt sind, ergeben sich mit den herkömmlichen Heizvorrichtungen Probleme bezüglich einer gleichmäßigen und ausreichend raschen Erwärmung.

Der vorliegenden Erfindung liegt daher die.Aufgabe zugrunde, ein beheizbares Lenkrad zu schaffen, das die genannten Nachteile vermeidet und eine gleichmäßige Erwärmung der Ummantelung ermöglicht.

Diese Aufgabe wird durch ein beheizbares Lenkrad mit den Merkmalen des Anspruchs 1 gelöst.

Danach ist vorgesehen, daß das mindestens eine Heizelement des Lenkrades durch ein elektrisch leitendes Kunststoffelement gebildet wird, das sich am Lenkradkranz entlang des Umfangs des Lenkrades erstreckt und dem zwei (unterschiedlich gepolte) Elektroden zugeordnet sind, die sich entlang des Kunststoffelementes erstrecken und dieses dabei kontaktieren.

Wenn diesem (diesen) als Widerstandsheizung dienende(n) und sich entlang des Lenkradkranzen erstreckende(n) Kunststoffelement(en) mittels der Elektroden über die gesamte Länge Strom zugeführt wird, kann eine gleichmäßige Aufheizung der Kunststoffelemente und damit des Lenkradkranzes erreicht werden.

Der Widerstand des erfindungsgemäß vorgesehenen Heizelementes aus Kunststoffelement und Elektroden ist im Vergleich zu dem in der DE 297 12 839 beschriebenen Heizelement verringert, da der Strom erfindungsgemäß nicht mehr entlang des Umfangs des Lenkradkranzes sondern nur noch entlang eines Teilabschnittes von dessen Durchmesser fließt.

In einer bevorzugten Ausführungsform ist das Kunststoffelement als Schale aus elektrisch leitfähigem Kunststoff ausgebildet, wobei die Schale das Lenkradskelett zumindest teilweise umschließt. Dabei kann die Heizleistung durch Variation der Dicke der Schale sowie des Abstandes der Elektroden gezielt eingestellt werden. Indem die Schale durch entsprechende Stromzufuhr entlang des Umfanges des Lenkrades gleichmäßig aufgeheizt wird, ist auch bei Verwendung schlecht wärmeleitender Materialien für die äußere Ummantelung (d.h. für das Dekor) eine für den Insassen angenehme Erwärmung des Lenkrades gewährleistet.

Da sich das Kunststoffelement in jeder beliebigen gewünschten Form sehr einfach durch Spritzguß herstellen läßt, wird der Aufwand bei der Herstellung des beheizbaren Lenkrades im Vergleich zu Lenkrädern mit Heizdraht erheblich vermindert. Ein Umwickeln von Teilen des Lenkradkranzes mit Heizdraht entfällt.

Vorzugsweise wird das Kunststoffelement als Schale direkt an das Lenkradkranzprofil angespritzt.

Alternativ kann die Schale aus zwei Halbschalen bestehen, die mechanisch miteinander verbunden und so an dem Lenkradskelett bzw. dem Kranzprofil befestigt werden.

Besonders bevorzugt werden die Halbschalen durch Ultraschallschweißen oder elektromagnetisches Schweißen miteinander verbunden, wobei die sich erfindungsgemäß entlang der Schalen erstreckenden Elektroden als Energierichtungsgeber bzw. Heizelement wirken. Dazu können die Elektroden in einer Ausführungsform von einem gelochten oder profilierten Metallband gebildet werden, wobei eine optimale formschlüssige Verbindung erreicht wird, da der verflüssigte Kunststoff die vorhandenen Räume ausfüllt.

Es ist zweckmäßig, daß die Schale bzw. die Halbschalen Verankerungen zu ihrer Festlegung an dem Lenkradskelett bzw. einem Teil des Kranzprofils aufweisen. Dadurch wird eine spielfreie Verbindung zwischen der Schale bzw. den Halbschalen und dem Lenkradskelett und/oder Kranzprofil erreicht. Beispielsweise können in dem Lenkradskelett Ausnehmungen vorgesehen sein, in die entsprechende Vorsprünge an den (Halb-)Schalen eingreifen.

Die Elektroden, die sich zusammen mit dem Kunststoffelement entlang des Umfanges des Lenkradkranzes erstrecken, sind vorzugsweise als Leiterbahnen ausgebildet. Dadurch läßt sich bei einem kleinen Gesamtwiderstand des (aus Kunststoffelement plus Elektroden bestehenden) Heizelements eine gleichmäßige Erwärmung erreichen. Die Leiterbahnen sollten in einem vorbestimmten, vorzugsweise konstantem Abstand zueinander in Kontakt mit dem Kunststoffelement stehen. Insbesondere ist eine Anordnung der Elektroden auf entgegengesetzten Seiten des als Schale ausgebildeten Kunststoffelements (beispielsweise oben und unten oder in radialer Richtung des Lenkradkranzes beabstandet) zweckmäßig.

Anstelle einer zweiten Leiterbahn kann auch das Lenkradskelett, das üblicherweise ohnehin aus leitfähigem Metall besteht, die zweite Elektrode bilden.

Die Leiterbahn(en) bestehen in einer bevorzugten Ausführungsform aus Kupfer, insbesondere aus Kupferlitze.

Das Kunststoffelement besteht aus einem elektrisch leitfähigen Kunststoff mit einem geeigneten Widerstand. Dazu eignen sich beispielsweise mit Kohlenstoffasern, Ruß oder Metallpartikeln gefüllte Polymere, wie z. B. Hostaform X326 (POM mit Kohlefasern) der Firma Hoechst. Der Widerstand läßt sich hierbei durch die Menge des Füllstoffes einstellen.

Alternativ wäre auch die Verwendung von Widerstandsblechen anstelle der Kunststoffelemente möglich, die Herstellung des Lenkrades ist jedoch dabei aufwendiger und daher ist eine Verwendung von Widerstandsblechen nur in speziellen Fällen vorzuziehen.

Die auf dem Kranzprofil angebrachte äußere Ummantelung besteht z. B. aus Holz, Leder, Folie und/oder Lack und bildet die für den Insassen sichtbare Dekor-Oberfläche. Die erfindungsgemäße Beheizung erlaubt dabei eine große Vielfalt an Materialen für dieses Dekor und läßt eine freie Gestaltung zu. Auch bei unterschiedlichen Materialien kommt es nicht zu örtlicher Überhitzung, da die Erwärmung mittels des längserstreckten und entlang seiner Erstreckungsrichtung mit Strom beaufschlagten Kunststoffelementes sehr gleichmäßig erfolgt.

Mit der erfindungsgemäßen Lösung ist es selbstverständlich auch möglich, nur einzelne Segmente des Lenkradkranzes zu beheizen. Dazu ist es zweckmäßig, das Kunststoffelement entlang des Umfanges des Lenkradkranzes in Segmente zu unterteilen, von denen nur einzelne beheizt werden.

So ist es möglich, das Lenkrad nur in der sogenannten 3 Uhr- und der 9 Uhr-Position, also in den Bereichen, in denen der Fahrer üblicherweise das Lenkrad anfaßt, zu beheizen. Auch können einzelne Bereiche bzw. Segmente des Heizelementes separat, z. B. unterschiedlich stark, beheizt werden.

Weiterhin ist es möglich, die Speichen, über die der Lenkradkranz mit einer Lenkradnabe verbunden ist, zumindest teilweise mit zu beheizen, indem die zu beheizenden Teile der Speichen mit einer Schicht aus elektrisch leitendem Kunststoff - und den zugehörigen Elektroden ausgestattet werden. Vorzugsweise sind dabei die elektrisch leitenden Kunststoffelemente und auch die Elektroden einteilig mit den entsprechenden Teilen des Lenkradkranzes ausgeführt.

Die vorliegende Erfindung soll anhand von Figuren im folgenden näher erläutert werden.

Es zeigen:
- Figur 1a:: eine Draufsicht auf ein beheizbares Lenkrad, wobei die zentrale Abdeckung des Lenkrades nicht dargestellt ist;
- Figur 1b:: einen Längsschnitt durch das Lenkrad in Figur 1a;
- Figur 1c:: eine Detailansicht des Schnittes gemäß Figur 1b;
- Figur 2a:: eine Draufsicht auf ein weiteres beheizbares Lenkrad, wobei die zentrale Abdeckung des Lenkrades nicht dargestellt ist;
- Figur 2b:: einen Längsschnitt durch das Lenkrad in Figur 2a;
- Figur 2c:: eine Detailansicht des Schnittes gemäß Figur 2b;
- Figur 3a:: eine Draufsicht auf ein drittes beheizbares Lenkrad, wobei die zentrale Abdeckung des Lenkrades nicht dargestellt ist;
- Figur 3b:: einen Längsschnitt durch das Lenkrad in Figur 3a;
- Figur 3c:: eine Detailansicht des Schnittes gemäß Figur 3b.

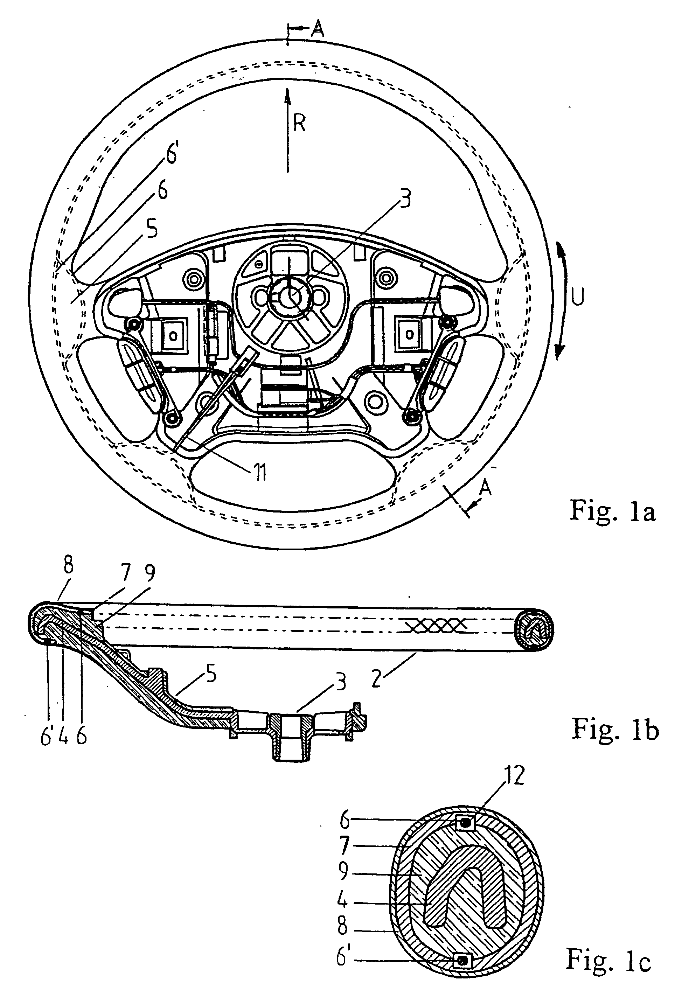

In Figur 1a ist ein erfindungsgemäßes Lenkrad 1 in der Draufsicht gezeigt. Im Bereich der Lenkradnabe 3 sind dabei zur besseren Erkennbarkeit der für die Erfindung wesentlichen Bauelemente die zentrale Abdeckung und einige weitere übliche Teile eines Lenkrades 1 nicht mit dargestellt.

Das Lenkrad 1 umfaßt eine Lenkradnabe 3, einen Lenkradkranz 2 und Speichen 5, die den Lenkradkranz 2 mit der Nabe 3 verbinden. Eine als Elektrode dienende Leiterbahn 6 eines erfindungsgemäßen Heizelementes ist mit gestrichelten Linien dargestellt. Die Leiterbahn 6 ist in dem Lenkradkranz 2 auf dessen Oberseite angeordnet und erstreckt sich entlang seines Umfangs U. Sie ist über eine Zuleitung 11 an eine Spannungsquelle angeschlossen. Eine als gegenpolige Elektrode dienende zweite Leiterbahn 6', von der in Figur 1a nur die Zuleitung 11 erkennbar ist, ist auf der Unterseite des Lenkradkranzes 2 angeordnet.

In Figur 1b ist ein Längsschnitt durch das Lenkrad aus Figur 1a entlang der Linie A-A gezeigt. Man erkennt den Lenkradkranz 2, die Speichen 5 und die Lenkradnabe 3. Weiterhin ist das Lenkradskelett 4 dargestellt, über welches der Kranz 2 mit der Nabe 3 tragend verbunden ist. Als äußere Ummantelung 8 ist in diesem Ausführungsbeispiel der Lenkradkranz 2 mit Leder bezogen.

Der genaue Aufbau des Lenkradkranzes 2 läßt sich am besten aus der Detailansicht in Figur 1c ersehen. Als tragendes Element befindet sich das Lenkradskelett 4 in der Mitte. Um das Lenkradskelett 4 herum ist eine Schicht aus isolierendem Kunststoff, z. B. aus PUR, als inneres Teil 9 des Kranzprofils angeordnet. Auf dieser sind die beiden Leiterbahnen 6 und 6' oben bzw. unten befestigt. Eine Schale 7 aus elektrisch leitendem Kunststoff umschließt die Leiterbahnen 6, 6' und den inneren Teil 9 des Kranzprofils. Über die gesamte Länge der Schale 7, die sich ebenso wie die Leiterbahnen 6 entlang des Umfangs U des Lenkrades 1 erstreckt, ist mittels der gegenpoligen Leiterbahnen 6, 6' Strom in die Schale 7 einleitbar. Dieser fließt durch die Schale 7 von der einen Leiterbahn (6) zur anderen (6') und erzeugt dadurch Wärme, die den Lenkradkranz 2 aufheizt. Die Leiterbahnen 6, 6' werden von Kupferlitze gebildet, die von einer Umhüllung 12 aus leitfähigem Kunststoff umgeben sind. Diese Umhüllung 12 stabilisiert die Metallitzen.

Man erkennt, daß erfindungsgemäß zur Erzielung einer gleichmäßigen Erwärmung trotzdem nur ein Stromanschluß für das Heizelement erforderlich ist, nämlich über die Zuleitung 11 (Fig. 1a). Denn durch die sich entlang des Umfanges U des Lenkrades 1 erstreckenden und senkrecht zur radialen Richtung R voneinander beabstandeten Leiterbahnen 6, 6' wird der Strom gleichmäßig auf dem Umfang U verteilt in die Schale 7 eingeleitet. Damit weist das Heizelement einen geringen Widerstand auf, und die Heizleistung ist durch die Wahl der Dicke der Schale 7 und des Abstandes zwischen den Leiterbahnen 6, 6' gezielt einstellbar.

Die Herstellung des erfindungsgemäßen Lenkrades 1 erfolgt vorzugsweise so, daß zunächst der innere Teil 9 des Kranzprofils um das Lenkradskelett 4 herum gespritzt wird. Danach werden die Leiterbahnen 6, 6' auf diesem Teil 9 befestigt, beispielsweise aufgeklebt. Anschließend wird das Kranzprofil fertiggestellt, indem die Schale 7 durch Umspritzen des Teils 9 und der daran befestigten Leiterbahnen 6, 6' mit elektrisch leitfähigem Kunststoff erzeugt wird. Dabei wird gleichzeitig der elektrische Kontakt zwischen den Leiterbahnen 6 und der Schale 7 hergestellt. Zum Abschluß wird die Ummantelung 8 durch Beziehen des Kranzprofils mit Leder aufgebracht.

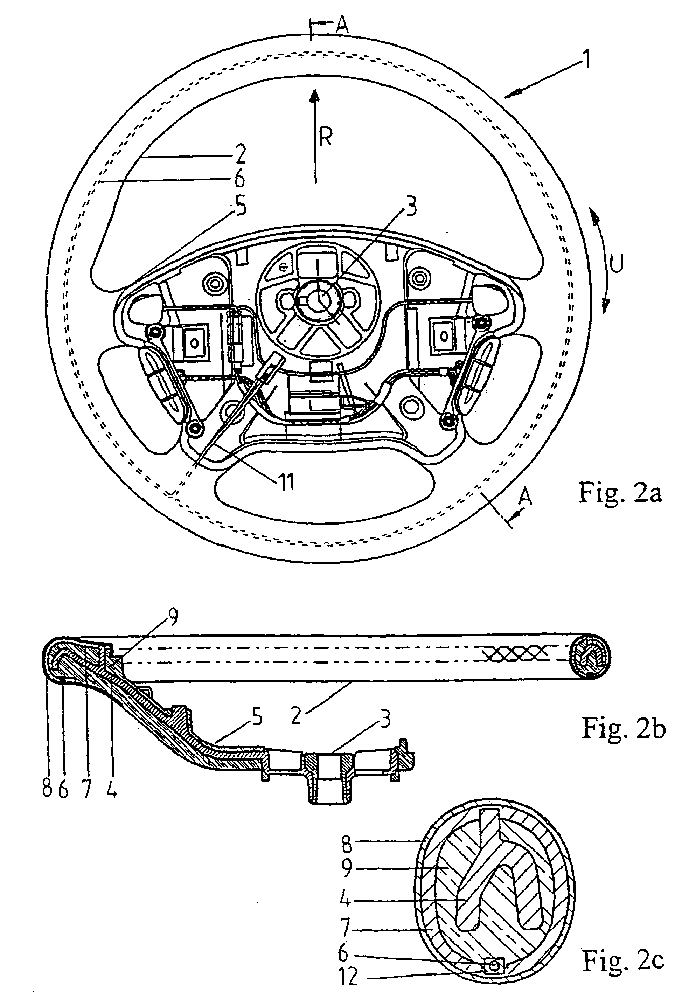

In den Figuren 2a bis 2c ist eine weitere Ausführungsform eines erfindungsgemäßen Lenkrades 1 dargestellt. Figur 2a zeigt eine Draufsicht entsprechend Figur 1a, wobei gleiche Teile mit gleichen Bezugsziffern gekennzeichnet sind und nicht nochmals erläutert werden sollen.

In diesem Ausführungsbeispiel dient das aus einem metallischen Material bestehende Lenkradskelett 4 als zweite Elektrode, wie sich am besten aus den Figuren 2b und 2c erkennen läßt. Das Lenkradskelett 4 ragt dazu an der Oberseite des Lenkradkranzes 2 durch den inneren Teil 9 des Kranzprofils hindurch in die Schale 7 hinein und befindet sich so entlang des Umfanges U des Lenkradkranzes 2 in elektrischem Kontakt mit der Schale 7.

Die Herstellung dieses Lenkrades kann analog zu der oben beschriebenen Herstellung des Lenkrades aus Figur 1 erfolgen.

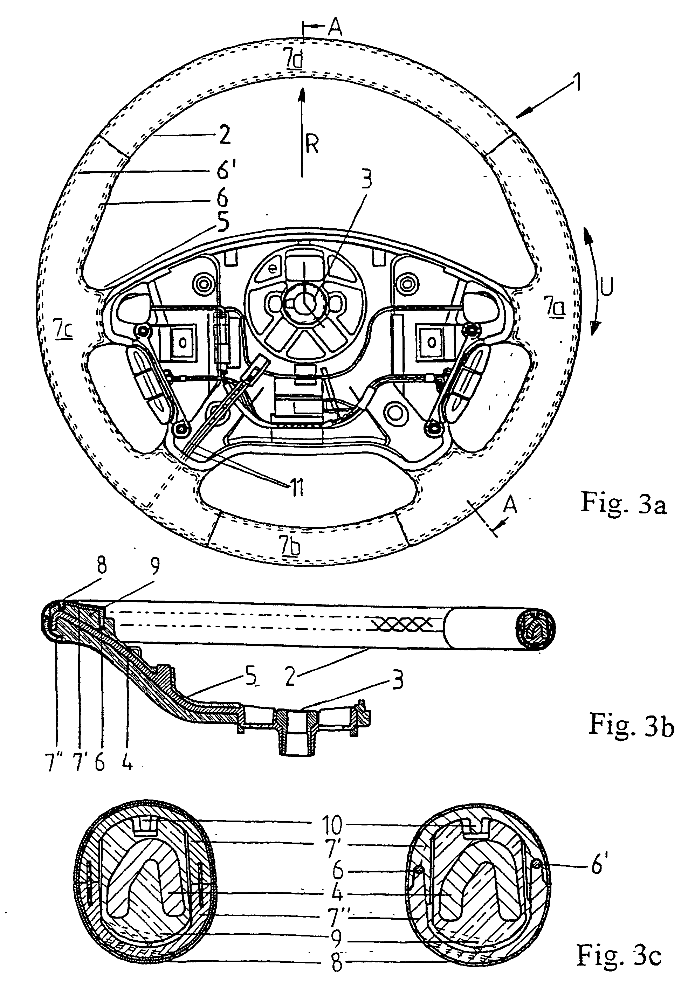

Die in den Figuren 3a bis 3c gezeigte Ausführungsform unterscheidet sich in zweierlei Hinsicht von den Ausführungsformen aus den Figuren 1 und 2.

Zum einen ist die aus leitfähigem Kunststoff bestehende Schale 7 in vier Segmente 7a - 7d unterteilt. Diese Segmente können einerseits unterschiedliche äußere Ummantelungen 8 aufweisen und andererseits auch wahlweise einzeln beheizbar sein. In dem hier gezeigten Ausführungsbeispiel sind nur das Segment 7a in der sogenannten 3-Uhr-Position und das Segment 7c in der 9-Uhr-Position des Lenkrades beheizbar. Bei den anderen beiden Segmenten 7b und 7d wurde anstatt eines leitenden ein isolierender Kunststoff eingesetzt.

Zum anderen sind die Segmente der Schale 7 jeweils aus Halbschalen 7' und 7'' zusammengesetzt, wie insbesondere in Figur 3c auf der rechten Seite erkennbar ist. Die Halbschalen 7' und 7'' sind über eine Verankerung 10 (beispielsweise mittels Rastelementen) spielfrei mit dem inneren Teil 9 des Kranzprofils verbunden. Weiterhin sind die beiden Halbschalen 7', 7'' untereinander durch elektromagnetisches Schweißen bzw. Ultraschallschweißen verbunden, wobei die beiden Leiterbahnen 6, 6' als Heizelement bzw. Richtungsgeber für den Schweißvorgang fungieren.

Wie in der Figur 3c auf der linken Seite gezeigt ist, sind in den Segmenten 7b und 7d der Halbschalen 7', 7'', die nicht beheizbar sind, die Leiterbahnen 6, 6' durch ein gelochtes Metallband ersetzt, wodurch der Zusammenhalt der Halbschalen 7', 7'' weiter verbessert ist.

In diesem Ausführungsbeispiel verlaufen die Leiterbahnen 6, 6' in radialer Richtung R des Lenkrades voneinander beabstandet "rechts" und "links" am Lenkradkranz 2.

Die Herstellung erfolgt bei dieser Ausführungsform so, daß wiederum zunächst der innere Teil 9 des Kranzprofils auf dem Lenkradskelett 4 befestigt wird. Davon unabhängig werden die Halbschalen 7' und 7'' in entsprechenden Formen gespritzt und die Leiterbahnen 6, 6' in Ausnehmungen der Halbschalen eingebracht. Dann werden die Halbschalen um das innere Teil 9 gelegt und durch Ultraschall bzw. ein wechselndes Magnetfeld wird der Kunststoff im Bereich der Leiterbahnen 6, 6' geschmolzen und unter Druck die Halbschalen 7, 7' zusammengefügt. Zugleich wird der Kontakt zwischen den Leiterbahnen 6, 6' und den Halbschalen 7', 7'' hergestellt und die Halbschalen 7, 7' werden über die Verankerung 10 an dem inneren Teil 9 festgelegt. Als letzter Schritt wird die Ummantelung 8 aufgebracht.

Selbstverständlich können auch bei Verwendung einer einteiligen leitfähigen Schale als Widerstandsheizelement einzelne Bereiche des Lenkradkranzes von der Beheizung ausgenommen werden; z.B. indem in diesen Bereichen die Leiterbahnen isoliert werden, so daß kein Strom in die Schale eingeleitet wird.

## Patentansprüche

1. Beheizbares Lenkrad mit einem Lenkradkranz, der ein Lenkradskelett und eine äußere Ummantelung des Lenkradskelettes umfaßt und der mindestens ein Heizelement zum Aufheizen der Ummantelung aufweist, wobei das Heizelement durch ein elektrisch leitendes Kunststoffelement gebildet wird, das sich am Lenkradkranz entlang des Umfangs des Lenkrades erstreckt und dem zwei Elektroden zugeordnet sind,
**dadurch gekennzeichnet,**
**daß** sich die Elektroden (6, 6') entlang des Kunststoffelementes (7) erstrecken.

2. Lenkrad nach Anspruch 1, **dadurch gekennzeichnet, daß** mittels der Elektroden (6, 6') Strom gleichmäßig entlang des Umfanges (U) des Lenkradkranzes (2) in das Kunststoffelement (7) einleitbar ist.

3. Lenkrad nach Anspruch 1 oder 2, **dadurch gekennzeichnet, daß** das Kunststoffelement (7) als Kunststoffschale ausgebildet ist, die das Lenkradskelett (4) zumindest teilweise umgreift.

4. Lenkrad nach Anspruch 3, **dadurch gekennzeichnet, daß** das Kunststoffelement (7) das Lenkradskelett (4) vollständig umschließt.

5. Lenkrad nach einem der vorhergehenden Ansprüche, **dadurch gekennzeichnet, daß** das Kunststoffelement (T) durch zwei Halbschalen (7', 7'') gebildet wird.

6. Lenkrad nach Anspruch 5, **dadurch gekennzeichnet, daß** die beiden Halbschalen (7', 7'') durch Ultraschallschweißen oder elektromagnetisches Schweißen miteinander verbunden sind.

7. Lenkrad nach Anspruch 5 oder 6, **dadurch gekennzeichnet, daß** zur Befestigung an dem Lenkradkranz (2) Verankerungen (10) an den Halbschalen (7', 7'') vorgesehen sind.

8. Lenkrad nach einem der vorhergehenden Ansprüche, **dadurch gekennzeichnet, daß** das Kunststoffelement (7) das Kranzprofil nach außen abschließt.

9. Lenkrad nach einem der vorhergehenden Ansprüche, **dadurch gekennzeichnet, daß** das Kunststoffelement entlang des Umfangs (U) des Lenkrades (1) in mindestens zwei Segmente (7a - 7d) unterteilt ist.

10. Lenkrad nach Anspruch 9, **dadurch gekennzeichnet, daß** die Segmente (7a - 7d) getrennt beheizbar sind.

11. Lenkrad nach Anspruch 9 oder 10, **dadurch gekennzeichnet, daß** nur ein Teil der Segmente (7a, 7c) beheizbar ist.

12. Lenkrad nach einem der vorhergehenden Ansprüche, **dadurch gekennzeichnet, daß** das Kunststoffelement (7) als Spritzgußteil ausgebildet ist.

13. Lenkrad nach Anspruch 12, **dadurch gekennzeichnet, daß** die Elektroden (6, 6') von dem Kunststoffelement (7) umspritzt sind.

14. Lenkrad nach einem der vorhergehenden Ansprüche, **dadurch gekennzeichnet, daß** die Elektroden als Leiterbahnen (6, 6') ausgebildet sind, die sich am Lenkradkranz (2) entlang des Umfangs (U) des Lenkrades (1) erstrecken.

15. Lenkrad nach einem der vorhergehenden Ansprüche, **dadurch gekennzeichnet, daß** die beiden Elektroden (6, 6') auf dem Lenkradkranz (2) in radialer Richtung (R) oder quer dazu voneinander beabstandet sind.

16. Lenkrad nach einem der vorhergehenden Ansprüche, **dadurch gekennzeichnet, daß** die beiden Elektroden (6, 6') auf entgegengesetzten Seiten des Kunststoffelements (7) angeordnet sind.

17. Lenkrad nach einem der Ansprüche 1 bis 14, **dadurch gekennzeichnet, daß** eine der Elektroden (6') durch das Lenkradskelett (4) gebildet wird.

18. Lenkrad nach einem der vorhergehenden Ansprüche, **dadurch gekennzeichnet, daß** mindestens eine der Elektroden (6, 6') aus Kupferlitze besteht.

19. Lenkrad nach einem der vorhergehenden Ansprüche, **dadurch gekennzeichnet, daß** mindestens eine der Elektroden von einem gelochten oder profilierten Metallband gebildet wird.

20. Lenkrad nach einem der vorhergehenden Ansprüche, **dadurch gekennzeichnet, daß** Speichen (5), die den Lenkradkranz (2) mit einer Lenkradnabe (3) verbinden, zumindest teilweise mit beheizt werden.

21. Lenkrad nach einem der vorhergehenden Ansprüche, **dadurch gekennzeichnet, daß** anstelle des Kunststoffelements Widerstandsbleche vorgesehen sind.

22. Lenkrad nach einem der vorhergehenden Ansprüche, **dadurch gekennzeichnet, daß** die Ummantelung (8) durch eine Dekorschicht aus Holz, Leder, Folie und/oder Lack gebildet wird.

## Claims

1. Heatable steering wheel having a steering wheel rim which comprises a steering wheel frame and an outer casing of the steering wheel frame and which has at least one heating element for heating up the casing, the heating element being formed by an electrically conductive plastic element which extends along the periphery of the steering wheel on the steering wheel rim and to which two electrodes are assigned, **characterized in that** the electrodes (6, 6') extend along the plastic element (7).

2. Steering wheel according to Claim 1, **characterized in that** current can be passed uniformly along the periphery (U) of the steering wheel rim (2) into the plastic element (7) by means of the electrodes (6, 6').

3. Steering wheel according to Claim 1 or 2, **characterized in that** the plastic element (7) is designed as a plastic shell which at least partially fits around the steering wheel frame (4).

4. Steering wheel according to Claim 3, **characterized in that** the plastic element (7) completely surrounds the steering wheel frame (4).

5. Steering wheel according to one of the preceding claims, **characterized in that** the plastic element (7) is formed by two half shells (7', 7'').

6. Steering wheel according to Claim 5, **characterized in that** the two half shells (7', 7'') are connected to each other by ultrasonic welding or electromagnetic welding.

7. Steering wheel according to Claim 5 or 6, **characterized in that** securing points (10) are provided on the half shells (7', 7'') for fastening them to the steering wheel rim (2).

8. Steering wheel according to one of the preceding claims, **characterized in that** the plastic element (7) closes off the rim profile to the outside.

9. Steering wheel according to one of the preceding claims, **characterized in that** the plastic element is divided into at least two segments (7a-7d) along the periphery (U) of the steering wheel (1).

10. Steering wheel according to Claim 9, **characterized in that** the segments (7a-7d) can be heated separately.

11. Steering wheel according to Claim 9 or 10, **characterized in that** only a section of the segments (7a, 7c) can be heated.

12. Steering wheel according to one of the preceding claims, **characterized in that** the plastic element (7) is designed as an injection molded part.

13. Steering wheel according to Claim 12, **characterized in that** the electrodes (6, 6') are encapsulated by the plastic element (7) by injection-molding.

14. Steering wheel according to one of the preceding claims, **characterized in that** the electrodes are designed as strip conductors (6, 6') which extend along the periphery (U) of the steering wheel (1) on the steering wheel rim (2).

15. Steering wheel according to one of the preceding claims, **characterized in that** the two electrodes (6, 6') are spaced apart from each other on the steering wheel rim (2) in the radial direction (R) or transversely thereto.

16. Steering wheel according to one of the preceding claims, **characterized in that** the two electrodes (6, 6') are arranged on opposite sides of the plastic element (7).

17. Steering wheel according to one of Claims 1 to 14, **characterized in that** one of the electrodes (6') is formed by the steering wheel frame (4).

18. Steering wheel according to one of the preceding claims, **characterized in that** at least one of the electrodes (6, 6') consists of a copper strand.

19. Steering wheel according to one of the preceding claims, **characterized in that** at least one of the electrodes is formed by a perforated or profiled metal strip.

20. Steering wheel according to one of the preceding claims, **characterized in that** spokes (5) which connect the steering wheel rim (2) to a steering wheel hub (3) are at least partially heated at the same time.

21. Steering wheel according to one of the preceding claims, **characterized in that** resistance plates are provided instead of the plastic element.

22. Steering wheel according to one of the preceding claims, **characterized in that** the casing (8) is formed by a decorative layer made of wood, leather, film and/or lacquer.

## Revendications

1. Volant de direction pouvant être chauffé comportant une couronne, qui comprend une ossature de volant et une enveloppe extérieure de l'ossature du volant et qui comporte au moins un élément chauffant servant à chauffer l'enveloppe, l'élément chauffant étant formé par un élément en matière plastique électriquement conducteur qui s'étend le long sur la couronne du volant, le long de la périphérie de ce dernier et auxquels sont associées deux électrodes, **caractérisé en ce que** les électrodes (6, 6') s'étendent le long de l'élément en matière plastique (7).

2. Volant de direction selon la revendication 1, **caractérisé en ce qu'**à l'aide des électrodes (6, 6'), un courant peut être introduit de façon uniforme, le long de la périphérie (U) de la couronne (2) du volant, dans l'élément en matière plastique (7).

3. Volant de direction selon la revendication 1 ou 2, **caractérisé en ce que** l'élément en matière plastique (7) est agencé sous la forme d'une coque en matière plastique, qui entoure au moins partiellement l'ossature (4) du volant.

4. Volant de direction selon la revendication 3, **caractérisé en ce que** l'élément en matière plastique (7) entoure complètement l'ossature (4) du volant.

5. Volant de direction selon l'une des revendications précédentes, **caractérisé en ce que** l'élément en matière plastique (7) est formé de deux demi-coques (7', 7").

6. Volant de direction selon la revendication 5, **caractérisé en ce que** les deux demi-coques (7', 7") sont reliées entre elles par soudage par ultrasons ou par soudage électromagnétique.

7. Volant selon la revendication 5 ou 6, **caractérisé en ce que** des éléments d'ancrage (10) sont prévus sur les demi-coques (7', 7") pour la fixation sur la couronne (2) du volant.

8. Volant de direction selon l'une des revendications précédentes, **caractérisé en ce que** l'élément en matière plastique (7) limite vers l'extérieur le profil de couronne.

9. Volant de direction selon l'une des revendications précédentes, **caractérisé en ce que** l'élément en matière plastique est divisé le long de la périphérie (U) du volant de direction (1) en au moins deux segments (7a-7d).

10. Volant de direction selon la revendication 9, **caractérisé en ce que** les segments (7a-7d) peuvent être chauffés séparément.

11. Volant de direction selon la revendication 9 ou 10, **caractérisé en ce que** seule une partie des segments (7a, 7c) peut être chauffée.

12. Volant de direction selon l'une des revendications précédentes, **caractérisé en ce que** l'élément en matière plastique (7) est agencé sous la forme d'une pièce moulée par injection.

13. Volant de direction selon la revendication 12, **caractérisé en ce que** les électrodes (6, 6') sont enrobées par injection par l'élément en matière plastique (7).

14. Volant de direction selon l'une des revendications précédentes, **caractérisé en ce que** les électrodes sont agencées sous la forme de voies conductrices (6, 6'), qui s'étendent sur la couronne (2) du volant le long de la périphérie (U) du volant (1).

15. Volant de direction selon l'une des revendications précédentes, **caractérisé en ce que** les deux électrodes (6, 6') sont situées à distance l'une de l'autre sur la couronne (2) du volant, dans une direction radiale (R) ou transversalement par rapport à cette direction.

16. Volant de direction selon l'une des revendications précédentes, **caractérisé en ce que** les deux électrodes (6, 6') sont disposées sur des côtés opposés de l'élément en matière plastique (7).

17. Volant de direction selon l'une des revendications 1 à 14, **caractérisé en ce que** l'une des électrodes (6') est formée par l'ossature (4) du volant.

18. Volant de direction selon l'une des revendications précédentes, **caractérisé en ce qu'**au moins l'une des électrodes (6, 6') est constituée par une tresse de cuivre.

19. Volant de direction selon l'une des revendications précédentes, **caractérisé en ce qu'**au moins l'une des électrodes est formée par une borne métallique perforée ou profilée.

20. Volant de direction selon l'une des revendications précédentes, **caractérisé en ce que** des rayons (5), qui relient la couronne (2) du volant à un moyeu (3) du volant, sont conjointement chauffés au moins partiellement.

21. Volant de direction selon l'une des revendications précédentes, **caractérisé en ce qu'**à la place de l'élément en matière plastique, on prévoit des tôles résistantes.

22. Volant de direction selon l'une des revendications précédentes, **caractérisé en ce que** l'enveloppe (8) est formée par une couche décorative en bois, en cuivre, une feuille et/ou une peinture.
